Europäisches Patentamt

European Patent Office

Office européen des brevets

(11) Publication number: **0 407 931 A2**

# EUROPEAN PATENT APPLICATION

(21) Application number: **90113056.7**

(22) Date of filing: **09.07.90**

(51) Int. Cl.⁵: **G11B 7/24**, G11B 7/26,
G11B 7/00

(30) Priority: **12.07.89 MY 8900957**

(43) Date of publication of application:
**16.01.91 Bulletin 91/03**

(84) Designated Contracting States:
**DE FR GB IT NL**

(71) Applicant: **LASER TECHNOLOGY SDN. BHD.**
**68 Jalan Tuanku Abdul Rahman**
**50100 Kuala Lumpur(MY)**

(72) Inventor: **Amanullah, Khalid**
**68, Jalan Tuanku Abbdul Rahman**
**50100 Kuala Lumpur(MY)**

(74) Representative: **Abitz, Walter, Dr.-Ing.**
**Abitz, Morf, Gritschneder, Freiherr von**
**Wittgenstein Postfach 86 01 09**
**D-8000 München 86(DE)**

(54) **Laser recording medium.**

(57) There is disclosed a laser recording medium comprising a base film (1), a dye or dye/polymer layer (2) and metal reflective layer (3). The modulated laser light passes through the base film (1) and it is absorbed by the dye (2) causing deformation or pits which reduce reflection and allow recording pattern to be written.

FIG. 1

EP 0 407 931 A2

## LASER RECORDING MEDIUM

### TECHNICAL FIELD

The present invention relates to Media for Laser recording

### BACKGROUND ART

Many laser recording mediums have been proposed. Some media are write-once type and others are recordable and erasable. One such medium for write-once type comprises a substrate with reflective layer on which an organic dye has been coated and protected by an overcoat. The dye is, for example, cyanine compound, naphthoquinone or others. The information is written in the medium by the laser light which is absorbed by the dye and forms pits or deformations, resulting in different reflection patterns.

However, the recording is done through the protective layer which may not be optically uniform. The interface between dye and protective layer may not be chemically stable, especially after writing by laser light energy. Also the adhesion and wearout resistance of the said protective coating is inferior in comparison to the base film.

### SUMMARY OF THE INVENTION

The present invention has therefore as an object to improve the laser recording media in such a way that the recording or writing is done through the base film instead of the protective coating layer.

This object is achieved in that the dye/polymer layer is first coated on the base film and then a reflective layer is applied to the dye/polymer layer, for example, by metal sputtering or evaporation. This way the active layer is formed in between the base film and the metal reflective layer, giving it better stability.

Another object of the invention is to make it easy to attach to a substrate by applying adhesive between the metal layer and the substrate, while providing tough external surface of the base film during usage.

The metal reflective layer can also be covered with a protective overcoat, for example UV curing lacquer or resin, for use without any additional substrate.

### SPECIFIC EXAMPLE

In order that the present invention may be readily understood, the following description is given, by way of example, of two specific embodiments of the laser recording media.

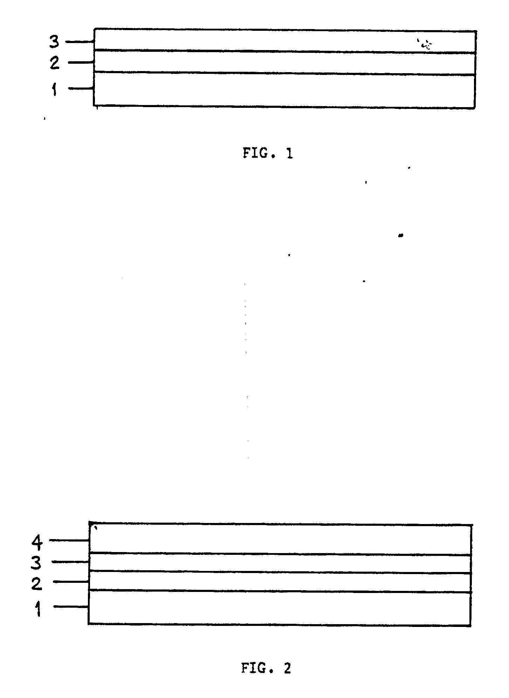

Fig. 1 shows a cross section of one embodiment of the laser recording medium, according to the invention, which consists of a base film 1, for example polyester or polycarbonate film, the dye or dye/polymer composite layer 2, a metal reflective layer 3 and optionally an adhesive layer 5. The dye is a phthalocyanine compound and dye/polymer is a mixture of phthalocyanine compound and a plastic polymer, for example polycarbonate. The dye or dye/polymer mixture is dissolved in organic solvents, such as toluene, and coated on base film by dipping or web coating technique. The metal reflective layer 3 is formed by metal sputtering or vacuum evaporation. The embodiment according to fig. 1 is suitable for attaching to a substrate for which an adhesive layer can be applied on top of the metal reflective layer.

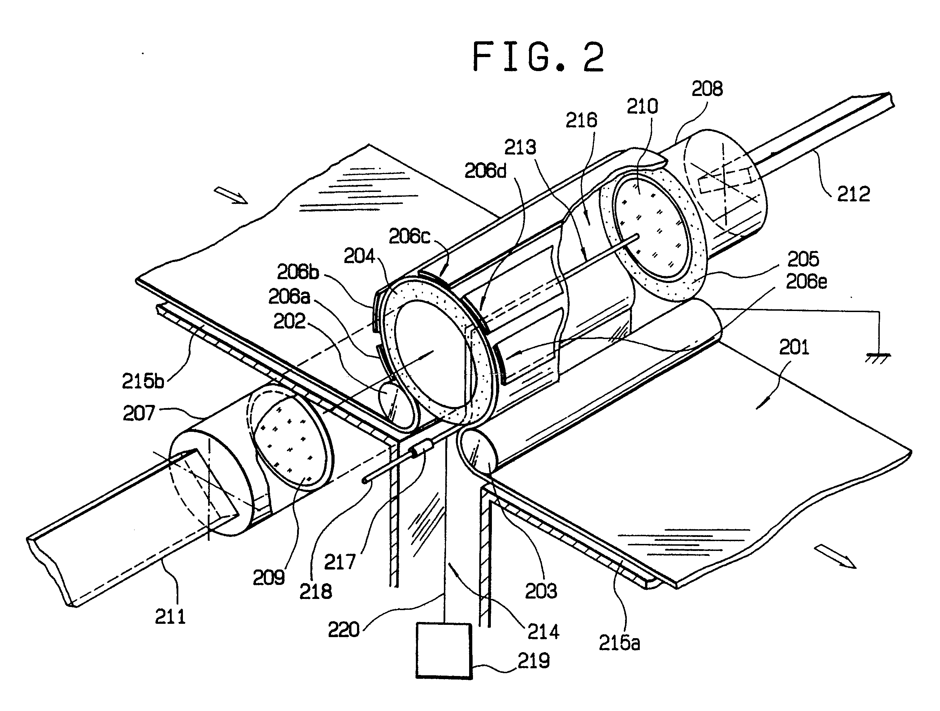

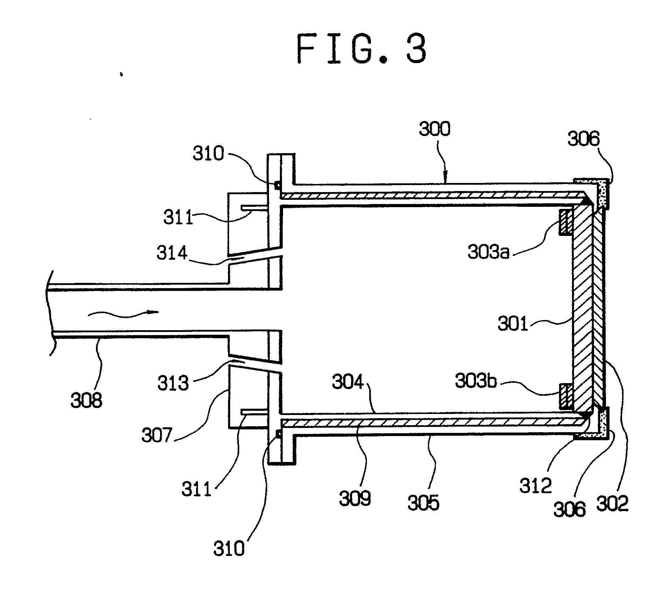

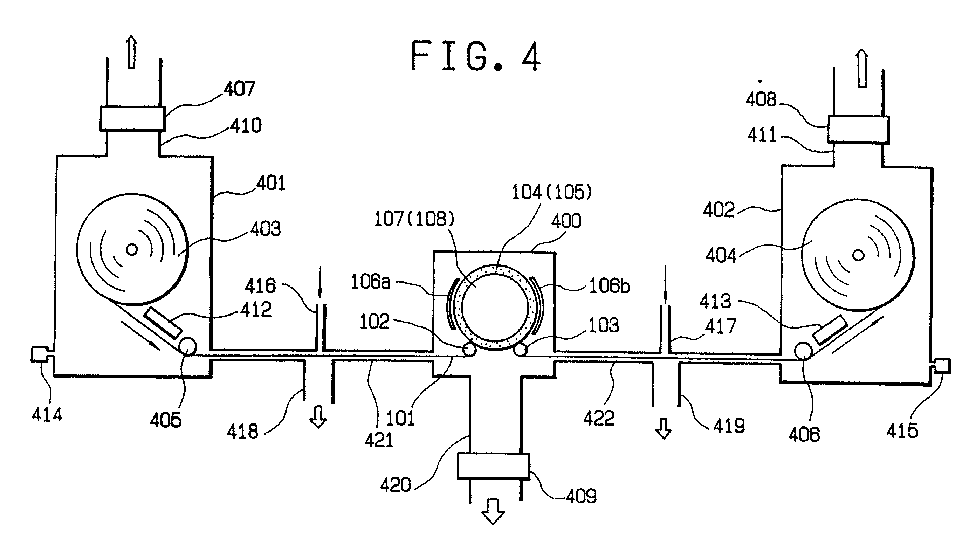

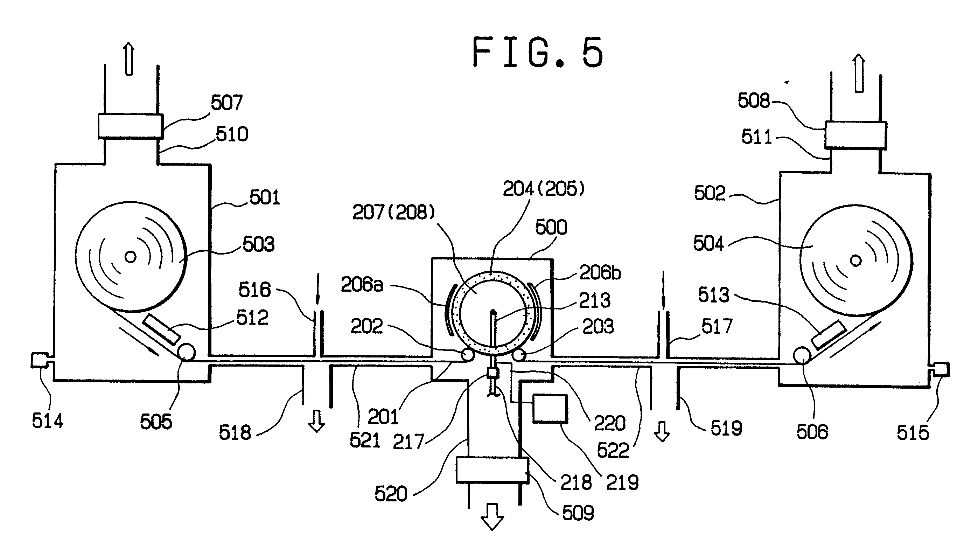

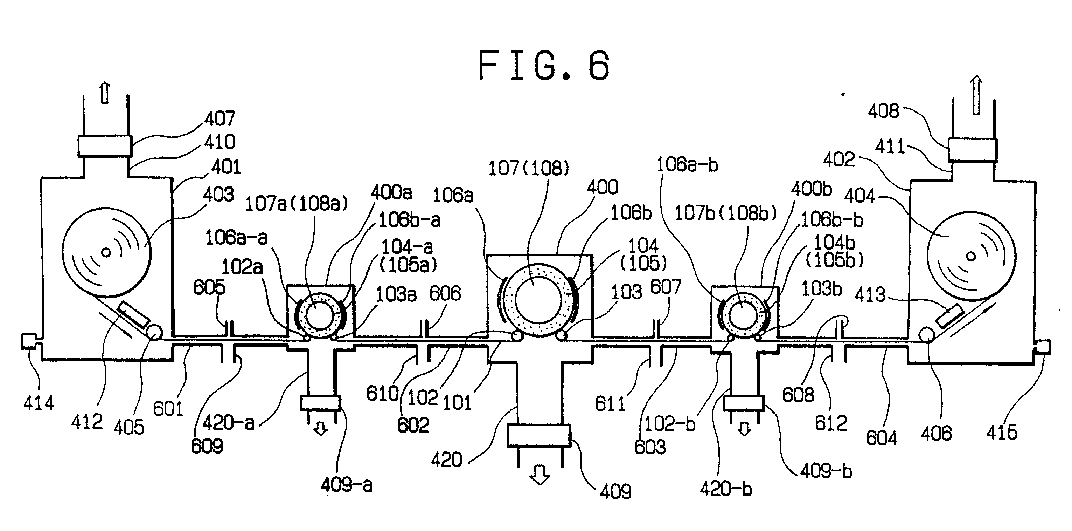

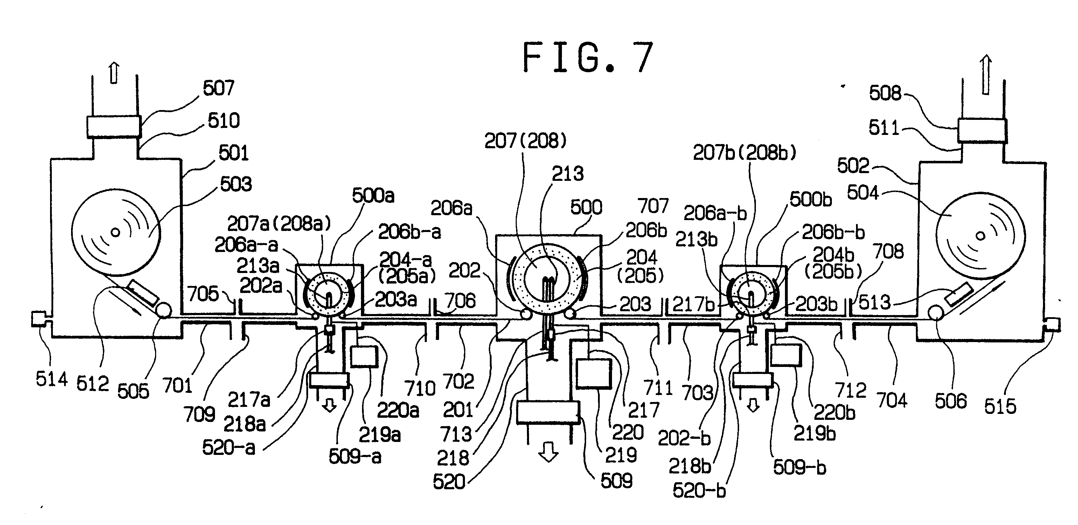

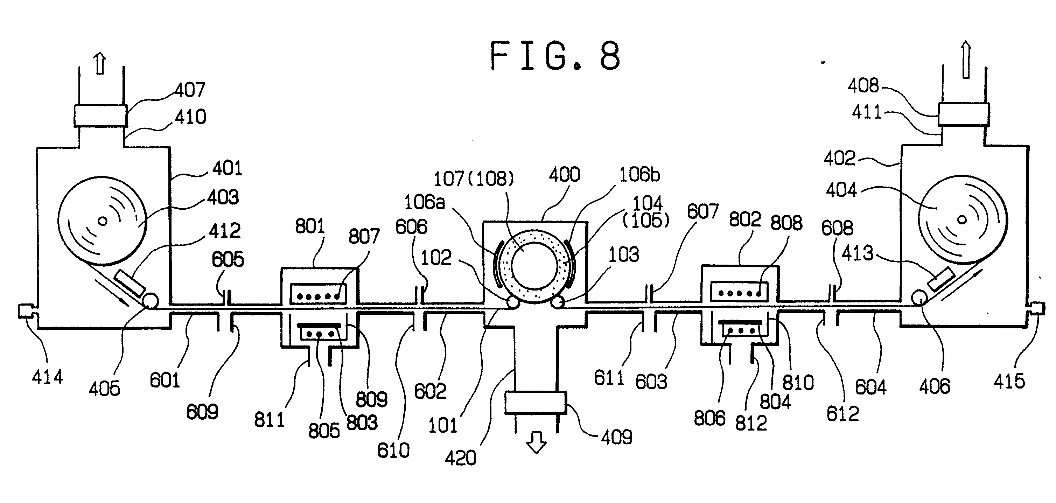

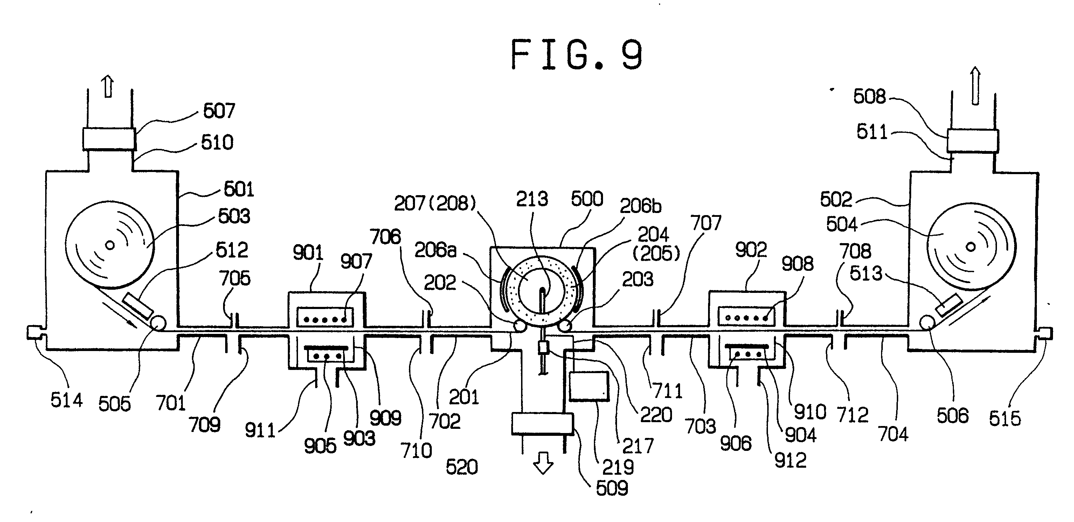

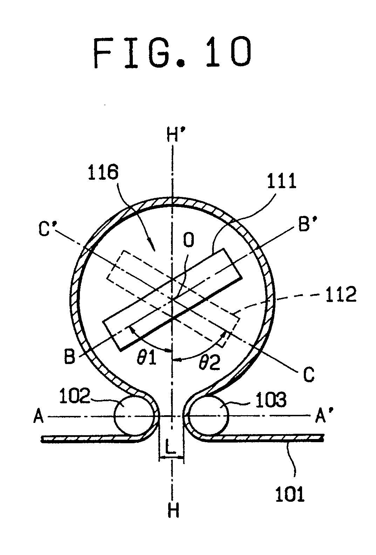

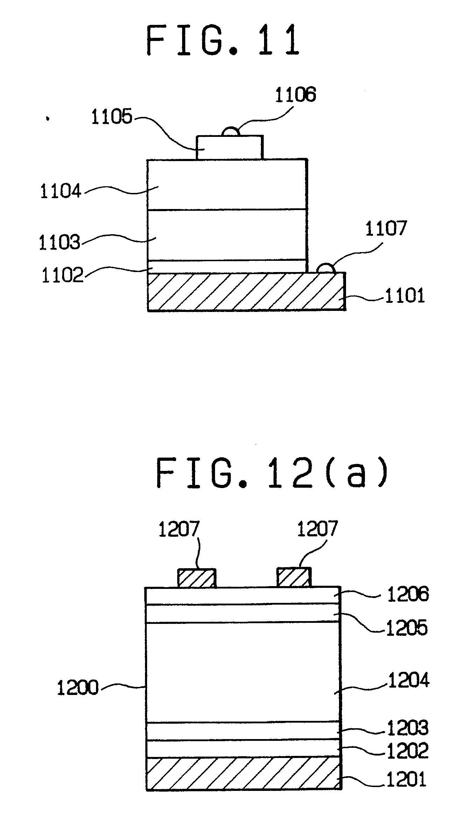

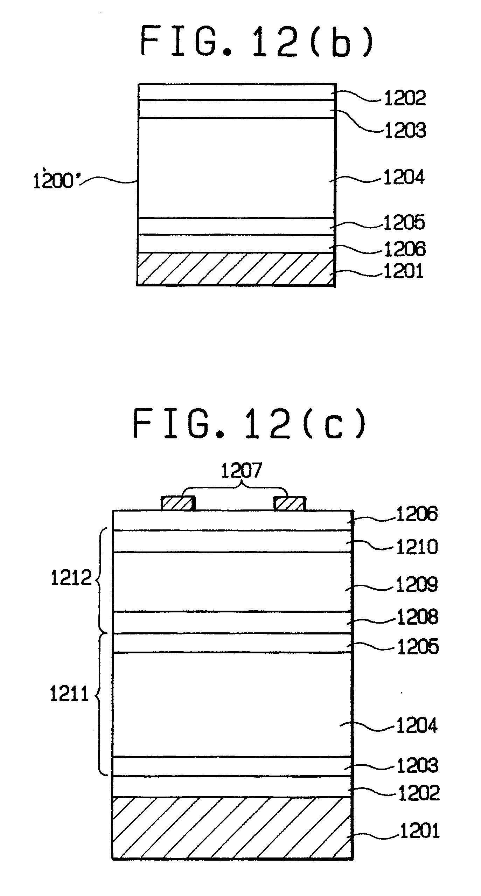

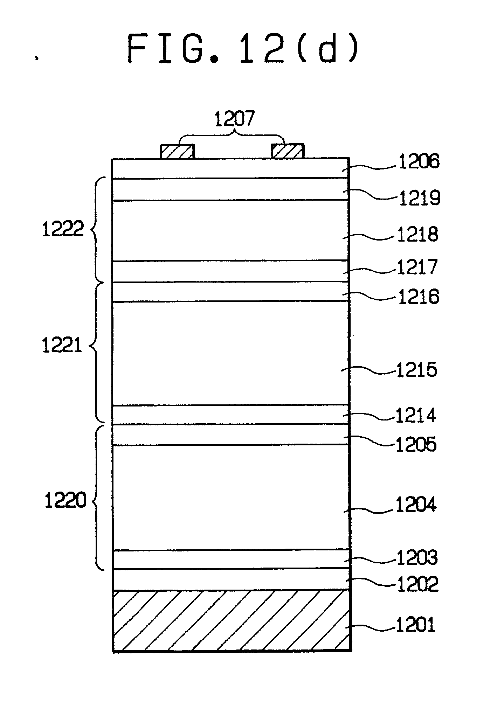

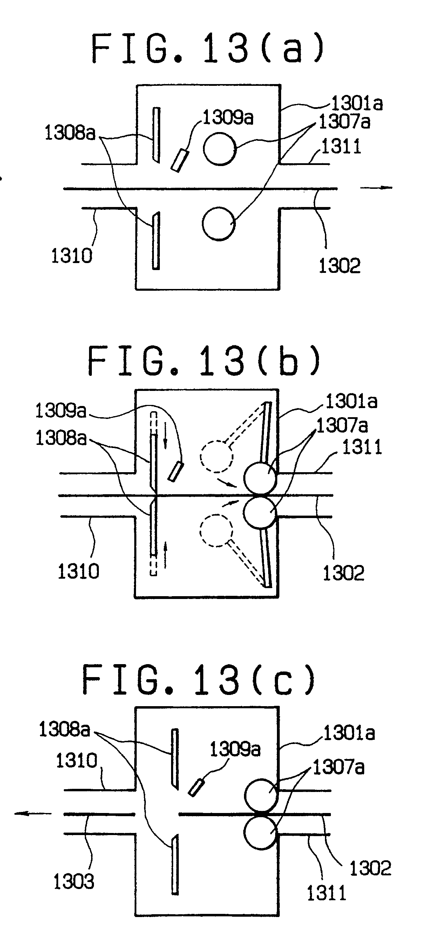

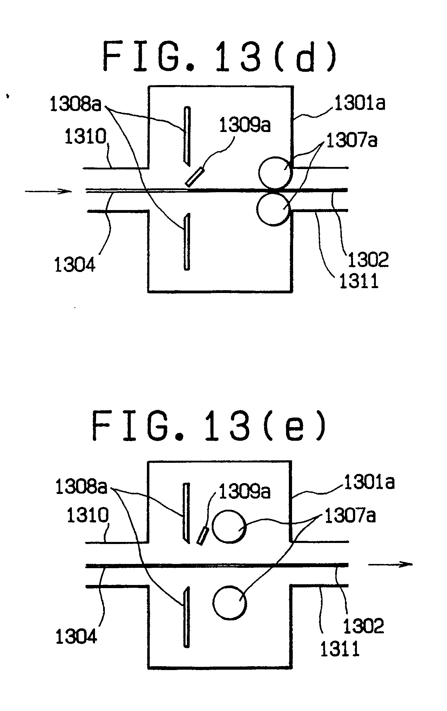

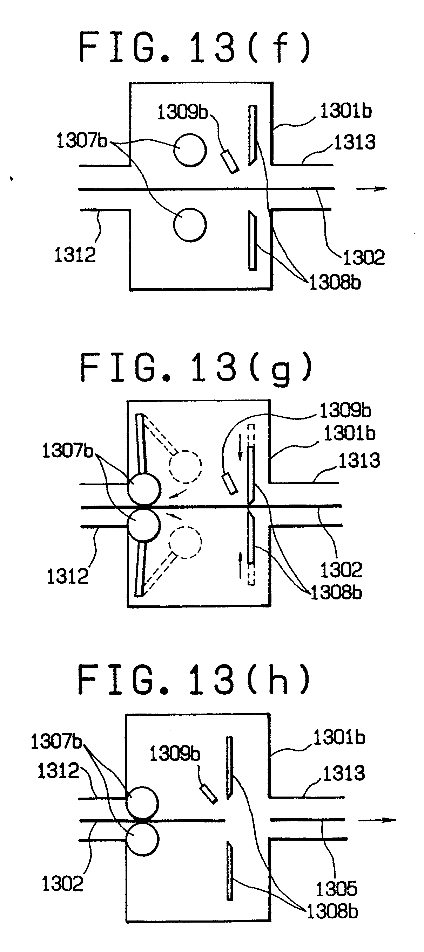

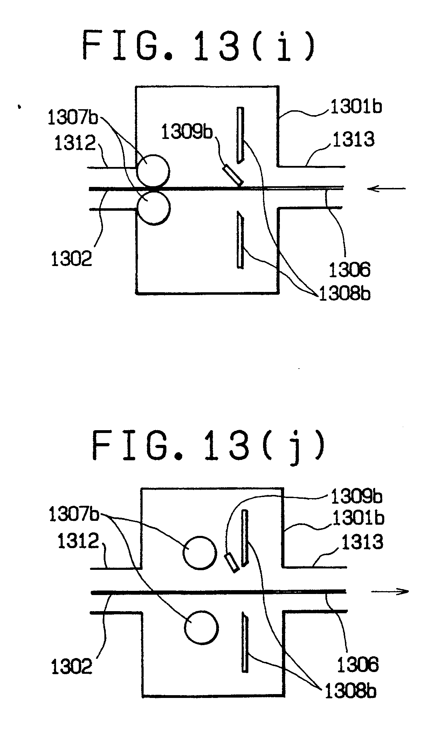

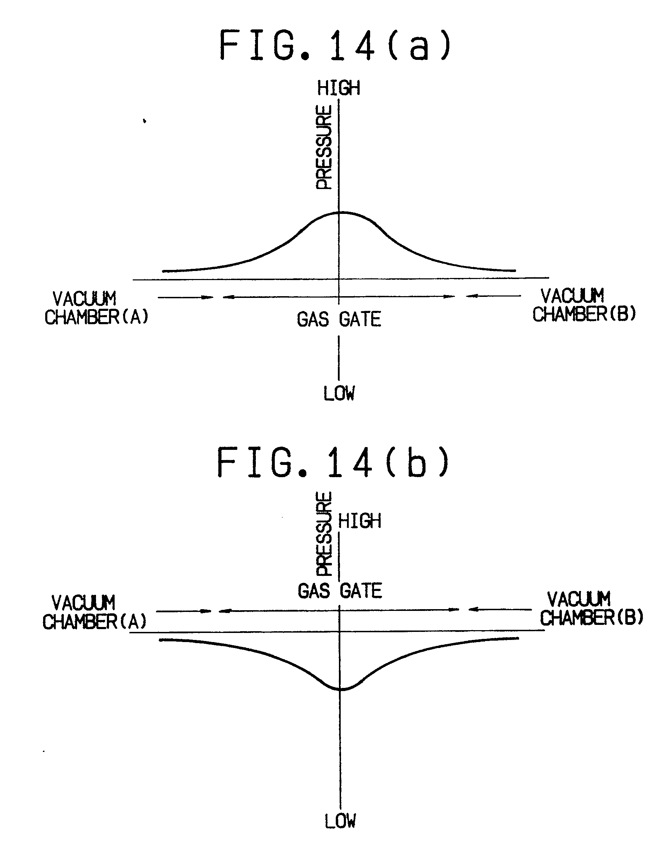

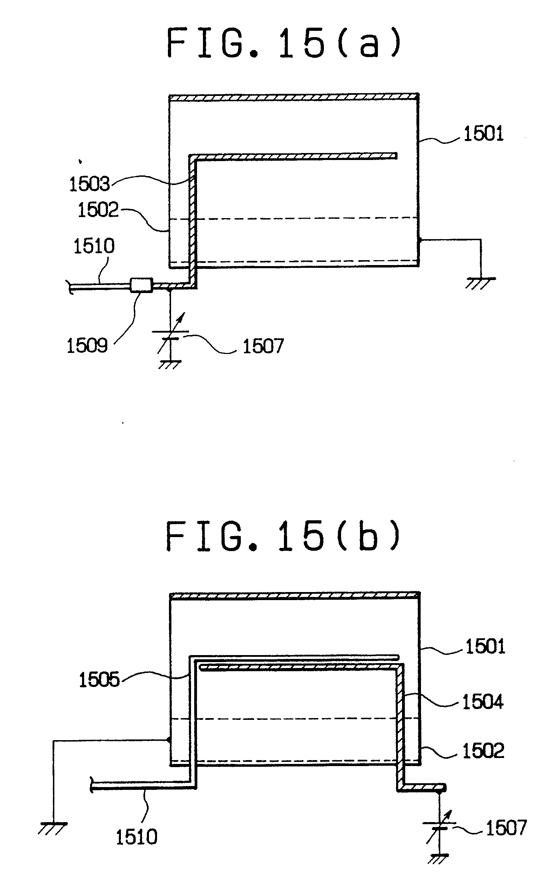

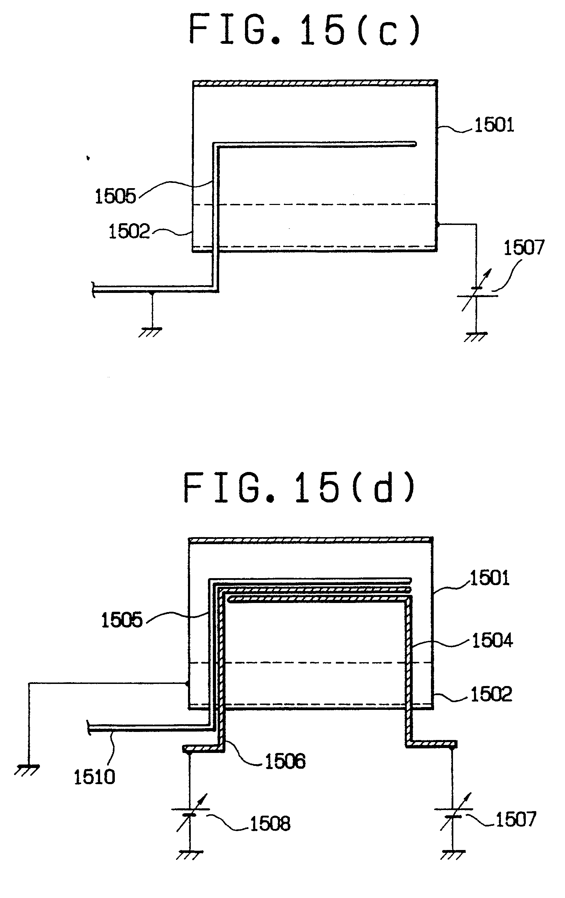

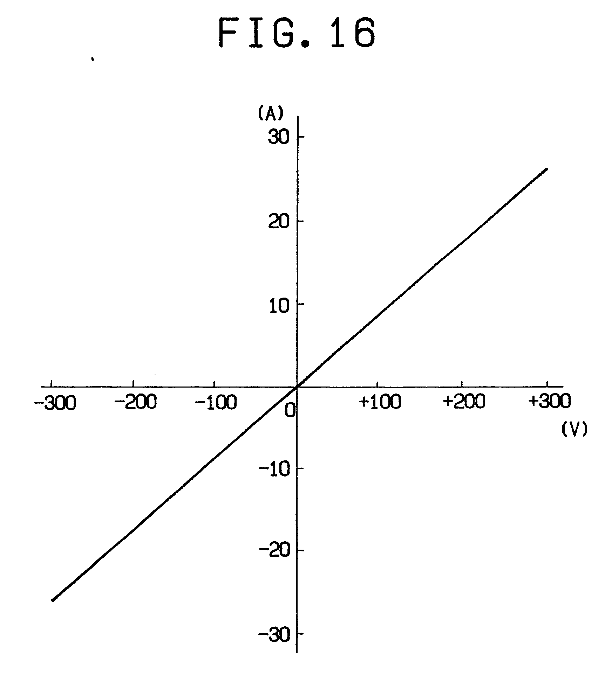

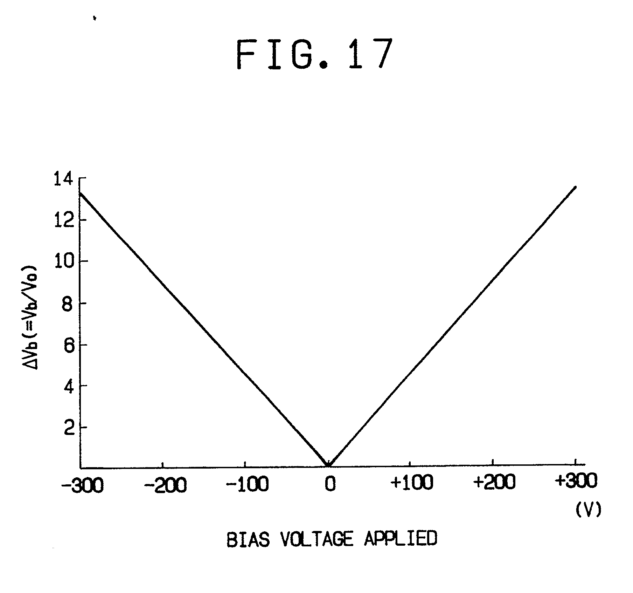

Fig. 2 shows another embodiment of the invention. For respective parts, the same reference numbers are used as in fig. 1. In this embodiment, a protective layer 4 is formed on top of the metal reflective layer 3 by spraying or overcoating with a UV curing lacquer or resin.

The information is recorded or written in the medium through the base film 1 by the laser beam which is absorbed by the dye and forms pits or deformations, resulting in reduction in reflection and allowing recording patterns.

### Claims

1. A laser recording medium comprising a base film (1), an organic dye or dye/polymer layer (2) and a metal reflective layer (3) is characterized in that the dye or dye/polymer layer (2) absorbs the modulated laser light through the base film (1) and thereby causing deformations or pits.

2. A laser recording medium according to claim 1 wherein the dye or dye/polymer layer (2) consists of a phthalocyanine compound or a mixture of phthalocyanine compound and a plastic polymer respectively.

3. A laser recording medium according to claim 1 characterized in that a protective layer (4) is formed by spraying or overcoating on the metal reflective layer (3).

4. A laser recording medium according to claim 1 characterized in that an adhesive layer or film (5) is coated or attached to the metal reflective layer (3).

FIG. 1

FIG. 2

FIG. 2

# FIG. 3

# FIG. 4

FIG. 5

## FIG. 6

FIG. 7

# FIG. 8

EP 0 407 931 A2

FIG. 9

# FIG. 10

# FIG.11

# FIG.12(a)

# FIG. 12(b)

# FIG. 12(c)

# FIG. 12(d)

# FIG. 13(a)

# FIG. 13(b)

# FIG. 13(c)

# FIG. 13(d)

# FIG. 13(e)

# FIG. 13(f)

# FIG. 13(g)

# FIG. 13(h)

# FIG. 13(i)

# FIG. 13(j)

# FIG. 14 (a)

# FIG. 14 (b)

# FIG. 15(a)

# FIG. 15(b)

# FIG. 15(c)

# FIG. 15(d)

# FIG.16

# FIG. 17